# EUROPEAN PATENT APPLICATION

(11) **EP 3 392 156 A1**
(43) Date of publication of application: **24.10.2018**
(21) Application number: 18163714.1
(22) Date of filing: 23.03.2018
(51) Int. Cl.: B65B 9/20, B65B 51/26

(54) **FORMING RING FOR PACKAGING MATERIAL**

(30) Priority: 19.04.2017 EP 17167138
(71) Applicant: Tetra Laval Holdings & Finance S.A., 1009 Pully (CH)
(72) Inventor: FLORENTZSON, Markus, 245 42 Staffanstorp (SE); JOHANSSON, Erik, 226 50 LUND (SE)
(74) Representative: Tetra Pak - Patent Attorneys SE

(57) **Abstract**

A forming ring (100) for packaging material is disclosed comprising rotary forming members (101) rotatably arranged to define an opening (102) for forming the packaging material in a tube-shaped configuration (200) extending in a longitudinal direction (103), wherein the rotary forming members are arranged in a first plane (104) of the forming ring. The forming ring comprising at least one sealing member (105,106) configured to, in use, seal longitudinal joining surfaces (201,201') of the tube-shaped configuration, subsequent of forming the packaging material in the tube-shaped configuration in the opening, wherein the at least one sealing member is arranged at an off-set distance (107) from the first plane in the longitudinal direction. A method of forming and sealing packaging material with a forming ring, and a filling machine is also disclosed.

## Description

### Technical Field

The present invention generally relates to the field of packaging machine systems and devices thereof for forming and sealing packaging containers in such systems. More particularly, the present invention relates to a forming ring for packaging material, a method of forming and sealing packaging material with a forming ring, and a filling machine having such forming ring.

### Background

In the field of packaging machine systems various devices and methods exists for forming the packaging material into packaging containers and for sealing the packaging containers. Packaging containers with liquid content can be manufactured according to the principle by which a web of packaging material moves substantially downwards through the filling machine, where the web is converted to a tube of packaging material in a forming ring. The tube is formed around a filler pipe and is filled continuously with the intended contents. At the bottom end of the filling machine, a gradual sealing of filled tube takes place, to sequentially produce filled packaging containers thereof. The packaging material in the tubular configuration is first sealed in the longitudinal direction, i.e. in the direction in which the tube extends and is conveyed, by means of a sealing device, before being filled with the liquid content. Typically, in a filling machine, a pressure roller is rotatably disposed inside the tubular packaging material and presses against longitudinal joining surfaces of the tubular packaging material, and a counter roller is rotatably disposed at the forming ring outside the tubular packaging material, to receive the pressing force applied by the pressure roller. Accordingly, as the packaging material travels, the pressure roller and the counter roller pinch the longitudinal sealing surfaces of the packaging material and provide for the sealing thereof.

Previous solutions for forming the packaging material in the tubular-shaped configuration and for providing the longitudinal sealing can result in wrinkled packaging material which can compromise the quality of the sealing. This may in particular be the case when packaging material have been provided with more complex opening mechanisms. Also, the amount of overlap between the longitudinal sealing surfaces can vary along the longitudinal direction, which may also be a cause of intermittent sub-optimally sealed packaging containers. Detecting flawed seals in a high-speed filling machine is cumbersome, and may regardless limit the throughput of the production line. Wrinkled packaging material may also affect subsequent folding procedures of the packaging material, to cause issues further down the production line, and possibly integrity issues of the finished packaging container.

Hence, an improved forming ring, a method of forming and sealing packaging material with a forming ring, and a filling machine having such forming ring, would be advantageous and in particular allowing for avoiding more of the above mentioned problems and compromises, including reducing the risk of wrinkled packaging material, defective sealing or integrity issues of the packaging containers.

### Summary

Accordingly, examples of the present invention preferably seeks to mitigate, alleviate or eliminate one or more deficiencies, disadvantages or issues in the art, such as the above-identified, singly or in any combination by providing a device according to the appended patent claims.

According to a first aspect a forming ring for packaging material is provided comprising rotary forming members rotatably arranged to define an opening for forming the packaging material in a tube-shaped configuration extending in a longitudinal direction, wherein the rotary forming members are arranged in a first plane of the forming ring. The forming ring comprising at least one sealing member configured to, in use, seal longitudinal joining surfaces of the tube-shaped configuration, subsequent of forming the packaging material in the tube-shaped configuration in the opening, wherein the at least one sealing member is arranged at an off-set distance from the first plane in the longitudinal direction.

According to a second aspect a method of forming and sealing packaging material with a forming ring having rotary forming members rotatably arranged to define an opening is provided. The method comprises forming the packaging material in a tube-shaped configuration in the opening by conveying the packaging material in a longitudinal direction through the opening, and sealing longitudinal joining surfaces of the tube-shaped configuration with at least one sealing member, subsequent of forming the packaging material in the tube-shaped configuration in the opening.

According to a third aspect a filling machine is provided comprising a forming ring according to the first aspect and packaging material formed in a tube-shaped configuration in an opening of the forming ring defined by rotary forming members arranged in a first plane. The tube-shaped configuration extending in a longitudinal direction, wherein at least one sealing member is configured to, in use, seal longitudinal joining surfaces of the tube-shaped configuration, subsequent of forming the packaging material in the tube-shaped configuration in the opening, wherein the at least one sealing member is arranged at an off-set distance from the first plane in the longitudinal direction.

Further examples of the invention are defined in the dependent claims, wherein features for the second and third aspects of the disclosure are as for the first aspect mutatis mutandis.

Some examples of the disclosure provide for reducing the risk of wrinkles in the packaging material when forming the packaging containers.

Some examples of the disclosure provide for improving the quality of the sealings of the packaging containers.

Some examples of the disclosure provide for a more reliable longitudinal sealing procedure.

Some examples of the disclosure provide for reducing the risk of package container integrity issues.

Some examples of the disclosure provide for reducing the fluctuations in the overlap of longitudinal sealing surfaces of the packaging material.

Some examples of the disclosure provide for maintaining a more accurate control of package container dimensions.

Some examples of the disclosure provide for a more accurate filling of the package container.

Some examples of the disclosure provide for reliable sealing of packaging containers with complex opening mechanisms.

Some examples of the disclosure provide for increasing the throughput of packaging containers in a filling machine.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

These and other aspects, features and advantages of which examples of the invention are capable of will be apparent and elucidated from the following description of examples of the present invention, reference being made to the accompanying drawings, in which;
Fig. 1 is a schematic illustration of a forming ring, in a perspective view, according to one example, where a tube of packaging material is formed in the forming ring;
Fig. 2 is a schematic illustration of a forming ring, in a side-view, according to one example;
Fig. 3 is a schematic illustration of a forming ring, in a perspective view, according to one example,
Fig. 4 is a schematic illustration of a forming ring, in a top-down view, according to one example;
Figs. 5a-b are schematic illustrations of a section of a forming ring, in top-down views, according to one example; and
Fig. 6 is a flowchart of a method of forming and sealing packaging material with a forming ring, according to one example.

### Detailed Description

Specific examples of the invention will now be described with reference to the accompanying drawings. This invention may, however, be embodied in many different forms and should not be construed as limited to the examples set forth herein; rather, these examples are provided so that this disclosure will be thorough and complete, and will fully convey the scope of the invention to those skilled in the art. The terminology used in the detailed description of the examples illustrated in the accompanying drawings is not intended to be limiting of the invention. In the drawings, like numbers refer to like elements.

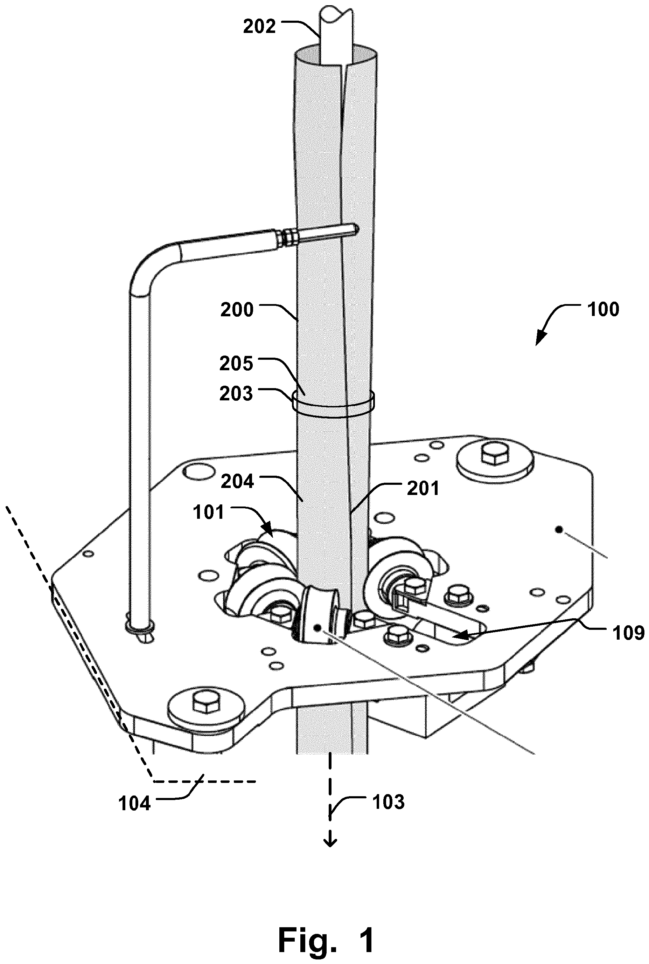

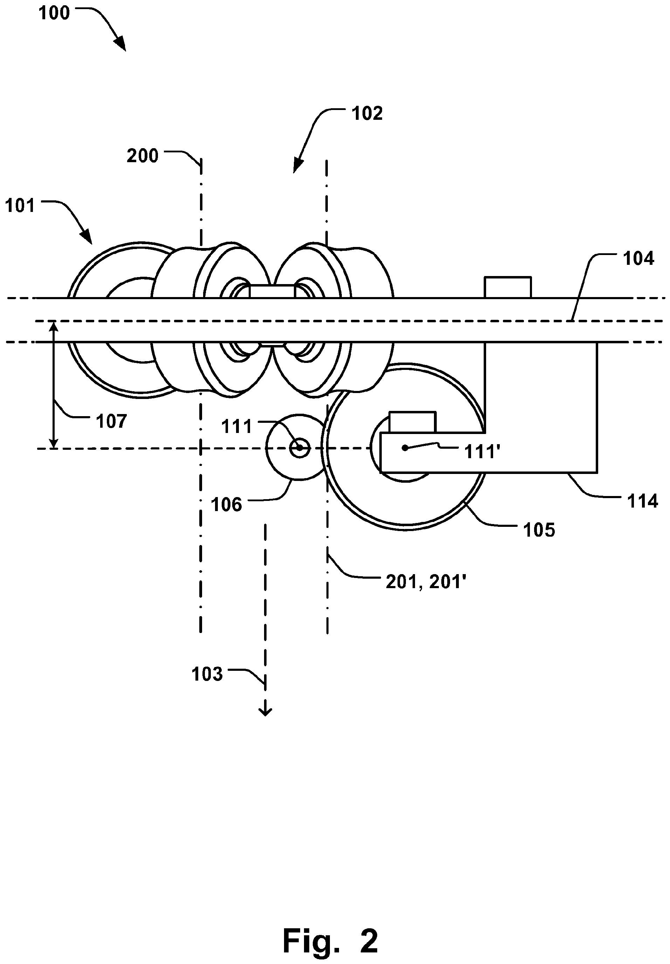

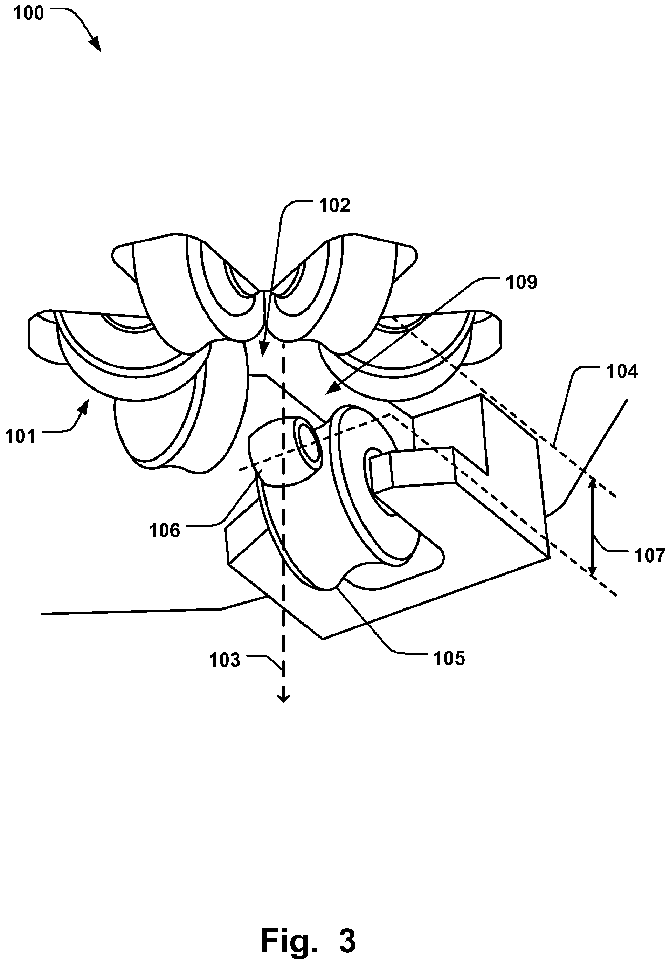

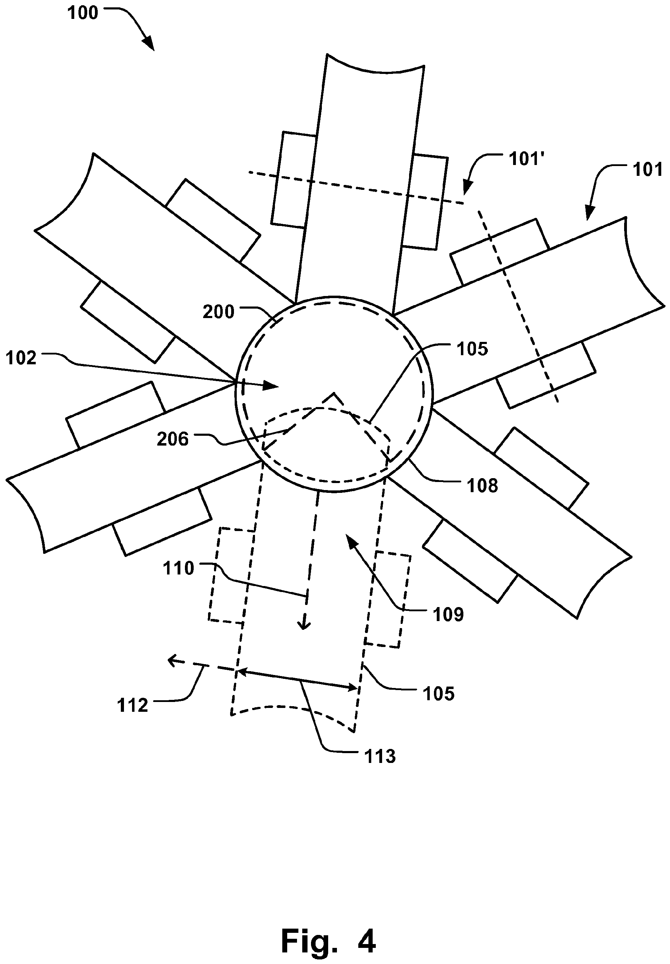

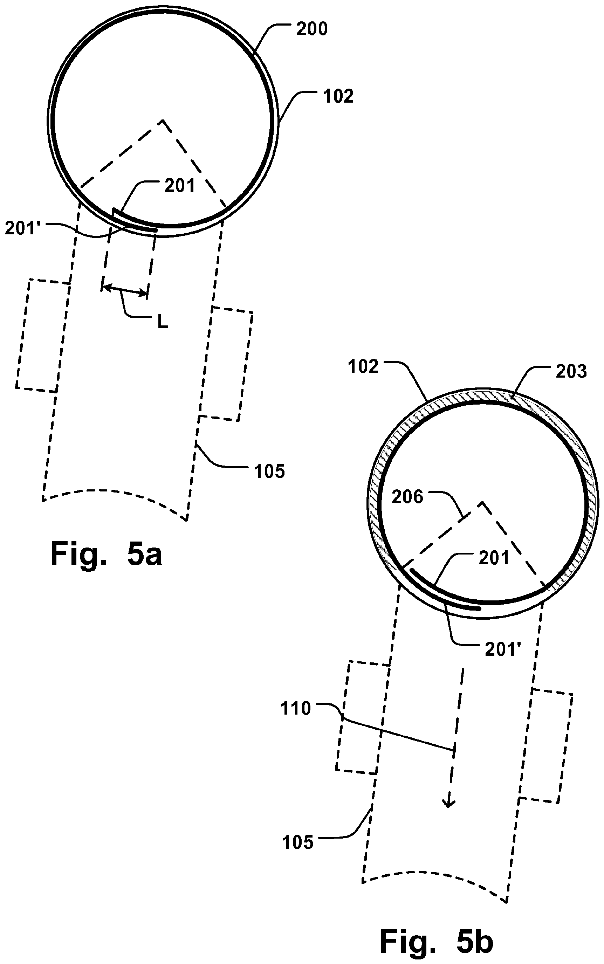

Fig. 1 is a schematic illustration of a forming ring 100 for forming packaging material into a tube-shaped configuration. The forming ring 100 comprises rotary forming members 101 rotatably arranged to define an opening 102 for forming the packaging material into the tube-shaped configuration 200 extending in a longitudinal direction 103. The opening 102 is shown in the perspective view of Fig. 3 or in the top-down view of Fig. 4. The rotary forming members 101 are arranged in a first plane 104 of the forming ring 100. Fig. 2 is a schematic illustration of the forming ring 100 in a side-view, showing the rotary forming members 101 being arranged in the plane 104. The forming ring 100 comprises at least one sealing member 105, 106 configured to, in use, seal longitudinal joining surfaces 201, 201', of the tube-shaped configuration 200, subsequent of forming the packaging material in the tube-shaped configuration 200 in the opening 102. The at least one sealing member 105, 106, is arranged at an off-set distance 107 from the first plane 104 in the longitudinal direction 103, as illustrated in Fig. 2. By having the at least one sealing member 105, 106, arranged at an off-set distance 107 from the first plane 104, in which the forming members 101 are arranged, the forming of the packaging material into the tube-shaped configuration 200 does not interfere with the sealing of the longitudinal joining surfaces 201, 201'. Any detrimental effect on the sealing due to displacement of the longitudinal joining surfaces 201, 201', occurring during the forming step by the rotary forming members 101, may thus be minimized. Defects or deformations of the packaging material, e.g. at or adjacent the sealing interface between longitudinal joining surfaces 201, 201', can thus be avoided, and the sealing can be made more reliable. This is particularly advantageous when having a packaging material provided with opening mechanisms in advance of being formed into the tube-shaped configuration 200, since such opening mechanisms may increase the amount of momentary fluctuation in the overlap of the longitudinal joining surfaces 201, 201', when engaged by the rotary forming members 101. This is further illustrated in Figs. 5a-b schematically showing a section of the forming ring 100 in a top-down view. In Fig. 5a, the tube-shaped configuration 200 of packaging material is arranged in the opening 102, with a defined overlap (L) between the longitudinal joining surfaces 201, 201'. The at least one sealing member 105 is illustrated in dashed lines at the position of the defined overlap (L). Once a section 203 of increased thickness of the tube-shaped configuration 200 reach the opening 102, the overlap of the longitudinal joining surfaces 201, 201', increases, as illustrated in Fig. 5b, since the added material in the radial direction 110 pushes the packaging material radially inwards. The section 203 of increased thickness, further shown in the example of Fig. 1, may be provided by an opening mechanism, such as an injection molded opening mechanism, which protrudes from the packaging material, thereby increasing the thickness of the tube along the radial direction 110. By having the at least one sealing member 105, 106, arranged at an off-set distance 107 from the first plane 104, in which the forming members 101 are arranged, the overlap of the longitudinal joining surfaces 201, 201', may again assume the defined overlap (L) shown in Fig. 5a, when the section of increased thickness 203 reaches the at least one sealing member 105, 106, since the radial constraint previously imposed by the forming members 101 at the position of the first plane 104 has been removed. The effect of the temporary displacement of the longitudinal joining surfaces 201, 201', on the sealing of the packaging material, caused by the section of increased thickness 203, is thereby minimized. The formation of wrinkles or other defects in the packaging material along the longitudinal joining surfaces 201, 201', can thereby be avoided, even if sealing packaging material having preformed structures on the surface thereof, such as opening mechanisms extending in the radial direction. In particular, in some applications the packaging material is provided with opening mechanisms that extend along the full width of the sheath of packaging material, apart from the longitudinal joining surfaces 201, 201'. In such case the section of increased thickness 203 may extend around most part of the diameter of the tube-shaped configuration, as schematically illustrated in Fig. 5b, apart from a sector 206 where the sealing occurs, and the effect on the overlap between the longitudinal joining surfaces 201, 201', will increase. Having the at least one sealing member is arranged at the off-set distance 107 from the first plane may thus be particularly advantageous in such situation. The reliability of the longitudinal sealing procedure can thus be improved, as the risk of obtaining defective seals due to fluctuations in the overlap of the longitudinal joining surfaces 201, 201', can be decreased.

The rotary forming members 101 may be arranged in a ring-shaped configuration as illustrated in the example of Fig. 4. The packaging material is conveyed through the opening 102 defined by the ring-shaped arrangement of the rotary forming members 101, to thereby define the diameter of the formed tube-shaped configuration 200. The number of rotary forming members 101 may be varied, so as the arrangement thereof, and the configuration shown in Fig. 4 is only an example of such configuration. It is further conceivable that the forming of the tube-shaped configuration is provided by other forming elements, not necessarily rotary forming elements 101 arranged in an annular configuration.

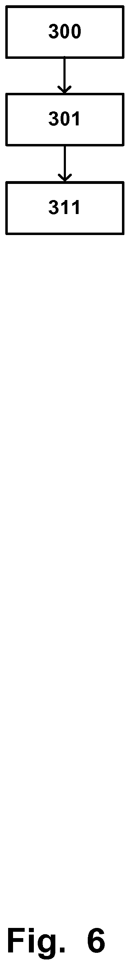

Fig. 6 illustrates a flow chart of a method 300 of forming and sealing packaging material with a forming ring 100 having rotary forming members 101 rotatably arranged to define an opening 102. The order in which the steps of the method 300 are described and illustrated should not be construed as limiting and it is conceivable that the steps can be performed in varying order. The method 300 comprises forming 301 the packaging material in a tube-shaped configuration 200 in the opening 102 by conveying the packaging material in a longitudinal direction 103 through the opening 102. The method 300 further comprises sealing 311 longitudinal joining surfaces 201, 201', of the tube-shaped configuration 200 with at least one sealing member 105, 106, subsequent of forming the packaging material in the tube-shaped configuration 200 in the opening 102. The method 300 thus provides for an advantageous forming and longitudinal sealing procedure of the packaging material, as elucidated above.

As described, the rotary forming members 101 may be arranged in a first plane 104 of the forming ring 100, and the at least one sealing member 105, 106, may be arranged at an off-set distance 107 from the first plane in the longitudinal direction 103.

Fig. 1 illustrates a first longitudinal section 204 and a second longitudinal section 205 of the tube-shaped configuration. The second longitudinal section 205 comprises a section 203 of increased thickness in a radial direction 110 of the tube-shaped configuration, as described in relation to Fig. 5b. The tube-shaped configuration 200 is conveyed in the longitudinal direction 103 so that the first longitudinal section 204 is positioned at the forming ring 100 before the second longitudinal section 205. The method 300 may comprise forming 302 the first longitudinal section 204 of the tube-shaped configuration 200 of the packaging material with a defined overlap (L) between the longitudinal joining surfaces 201, 201', as illustrated in Fig. 5a. The method 300 may further comprise sealing 303 the first longitudinal section 204 by joining the longitudinal joining surfaces 201, 201', for fixation 304 of the defined overlap (L), and conveying 305 the second longitudinal section 205 of the tube-shaped configuration 200 through the opening 102. The second longitudinal section 205 comprises a section 203 of increased thickness in a radial direction 110 of the tube-shaped configuration 200, as illustrated in Fig. 5b, whereby the method 300 comprises temporarily increasing 306 the overlap, from the defined overlap (L), between the longitudinal joining surfaces 201, 201', of the second longitudinal section 205, when conveyed through the opening 102. The method 300 may subsequently comprise conveying 307 the second longitudinal section 205 to the at least one sealing member 105, 106, whereupon the overlap between the longitudinal joining surfaces 201, 201', at the at least one sealing member 105, 106, is increased 308 to said defined overlap (L), and sealing 309 the second section 205 by joining the longitudinal joining surfaces 201, 201', for fixation 310 of the defined overlap (L). The overlap between the longitudinal joining surfaces 201, 201', at the at least one sealing member 105, 106, can re-assume the defined overlap (L) since the constraint posed by the rotary forming members 101 has been removed at the offset distance 107. The method 300 thus provides for accommodating sections of increased thickness of the tube-shaped configuration 200, while allowing accurate forming thereof by the rotary forming members 101 and securely sealing the longitudinal joining surfaces 201, 201', with minimized risk of detrimental deformation of the packaging material.

The at least one sealing member 105, 106, may be rotatably arranged to the forming ring 100, whereby a rotational axis 111, 111', of the at least one sealing member 105, 106, may be arranged at the off-set distance 107 from the first plane 104, as illustrated in the example of Fig. 2. This provides for attaining a reliable sealing of the longitudinal joining surfaces 201, 201', being conveyed on the rotatable at least one sealing member 105, 106. It is conceivable however that the at least one sealing member 105, 106, comprises other sealing units configured to seal the packaging material in the longitudinal direction 103. The longitudinal joining surfaces 201, 201', may be sealed by adhesive materials and/or induction welding and/or hot air. The at least one sealing member 105, 106, may thus comprise an inductor arranged against the packaging material, and configured to induce an alternating current in a metallic foil of the packaging material causing the material to heat up and fusing of oppositely arranged longitudinal joining surfaces 201, 201'. The packaging material may be conveyed in the longitudinal direction 103 by sliding against a welding surface of an inductor, which is arranged at an off-set distance 107 from the first plane 104 in the longitudinal direction 103.

The at least one sealing member 105, 106, may comprise first 105 and second 106 rotatable members arranged to pinch the packaging material therebetween, in use, for sealing thereof along the longitudinal joining surfaces 201, 201'. As illustrated in e.g. Fig. 2, the packaging material of the tubular configuration 200 is positioned between the first 105 and second 106 rotatable members. The longitudinal joining surfaces 201, 201', may be provided with an adhesive material such as an adhesive disposed therebetween or a strip of adhesive material arranged along the longitudinal joining surfaces 201, 201'. Upon pressing the longitudinal joining surfaces 201, 201', against the adhesive material between the first 105 and second 106 rotatable members, the longitudinal joining surfaces 201, 201', can be attached to one another and sealed. It is conceivable that the at least one sealing member 105, 106, comprises rotary sealing members arranged in a different configuration, than shown in the example of e.g. Fig. 2, such as in a varying number or in a different orientation relative to the forming ring 100, while being arranged at an off-set distance 107 from the first plane 104 in the longitudinal direction 103.

The first and second rotatable members 105, 106, may be arranged in the longitudinal direction 103 so that the packaging material, in use, is pinched at the off-set distance 107 from the first plane 104. This may provide for an optimized sealing of the longitudinal joining surfaces 201, 201', as the overlap thereof may again assume the predetermined set overlap (L) at the off-set distance 107, after being temporarily increased in the plane 104 of the forming members 101 as described in relation to Figs. 5a-b. It is conceivable however that the packaging material may be pinched at a location which is separated from either of the rotational axes 111, 111', in the longitudinal direction 103, e.g. by having one of the first and second rotatable members 105, 106, off-set in relation to the other, in the longitudinal direction 103. Such off-set may be varied to provide for an adjustable alignment of the first and second rotatable members 105, 106, in relation to each other, e.g. in order to achieve an optimized tubular forming and sealing procedure, depending the application and the particular packaging material used.

Respective rotational axes 101' of the rotary forming members 101 may be arranged to extend in the first plane 104. Fig. 2, in conjunction with Fig. 4 illustrates the rotational axes 101' being aligned in the substantially the same plane 104. Not all of the rotational axes 101' has been indicated for clarity of presentation. Having the rotational axes 101' aligned in the substantially the same plane 104 can provide for accurate controlling the dimensions of the tubular configuration 200 in the forming process, but it is conceivable that at least some of the rotary forming members 101, and the associated rotational axes 101' thereof, may be aligned outside the plane 104 to optimize the forming and sealing process depending on the particular application and the packaging material.

The rotary forming members 101 may be arranged to define a periphery 108 of the opening 102, wherein the at least one sealing member 105, 106, is arranged at the off-set distance 107 so that the forming ring 100 comprises a radial spacing 109 extending in said plane 104 in a radial outward direction 110 from the periphery 108. Fig. 3 shows a perspective view from a position downstream of the forming ring 100 in the direction in which the tubular configuration 200 is conveyed, i.e. the direction of the longitudinal axis 103. The radial spacing 109 is indicated above the at least one sealing member 105, 106, which is further indicated in the top-down view of Fig. 4. Having such radial spacing 109 in the plane 104 of the forming ring 100 provides a space into which the packaging material may temporarily move (in the direction of the radial arrow 110 in Fig. 5b) when being pushed radially inwards due to a section 203 of increased thickness engaging with the rotary forming members 101, as explained in relation to Fig. 5b. The amount of increase in the overlap between longitudinal joining surfaces 201, 201', as the section 203 of increased thickness pass through the opening 102 of the forming ring 100 can thus be reduced. Accordingly, as the fluctuation in the overlap is reduced, the risk of deforming the packaging material when being sealed can be further reduced.

Turning to the example of Fig. 4, the radial spacing 109 may have a width in an orthogonal direction 112, being perpendicular to the radial outward direction 110 and to the longitudinal direction 103, corresponding to a width 113 of the at least one sealing member 105, 106, the orthogonal direction 112. This may provide for maximizing the width of the radial spacing 109 and further facilitate for accommodating an increased amount of movement of the packaging material in the radial direction 110, when being engaged by the forming members 101. The width 113 may still be sufficiently narrow to maintain a well-defined diameter of the tubular configuration 200.

The forming ring 100 may comprise a mounting element 114, as schematically illustrated in Fig. 2, being configured to attach the at least one sealing member 105, 106, at a variable position along the longitudinal direction 103 and/or at a variable position along a direction perpendicular to the longitudinal direction 103, such as in the radial direction 110. The alignment of the sealing member 105, 106, may thus be readily varied to customize the forming ring 100 to various applications and packaging materials, e.g. being provided with different opening mechanisms - thereby affecting the dimensions of the increased thickness section 203 (Fig. 5b). The radial displacement of the packaging material and associated fluctuation in the overlap may be further minimized by the facilitated adjustment in the position of the mounting element 114.

The first rotatable member 105 may comprise a first roller 105 arranged at the forming ring 100 radially outside a periphery 108 of the opening 102 as illustrated in Fig. 4. The second rotatable member 106 may comprise a pressure roller 106 attachable to a filling pipe 202 (Fig. 1) arranged inside the tube-shaped configuration 200 of packaging material, as further exemplified in the top-down view of Fig. 4. The pressure roller 106 may thus push against the first roller 105 as explained above, from either side of the packaging material to seal the packaging material together.

A filling machine (not shown) is provided comprising a forming ring 100 as described above in relation to Figs. 1 - 5, and a packaging material which is formed in a tube-shaped configuration 200 in an opening 102 of the forming ring 100 defined by rotary forming members 101. The rotary forming members 101 are arranged in a first plane 104, and the tube-shaped configuration 200 extends in a longitudinal direction 103. At least one sealing member 105, 106, is configured to, in use, seal longitudinal joining surfaces 201, 201', of the tube-shaped configuration 200, subsequent of forming the packaging material in the tube-shaped configuration 200 in the opening 102, wherein the at least one sealing member 105, 106, is arranged at an off-set distance 107 from the first plane 104 in the longitudinal direction 103. The filling machine 300 thus provides for the advantageous effects as described above in relation to Figs. 1 -6.

The present invention has been described above with reference to specific examples. However, other examples than the above described are equally possible within the scope of the invention. The different features and steps of the invention may be combined in other combinations than those described. The scope of the invention is only limited by the appended patent claims.

More generally, those skilled in the art will readily appreciate that all parameters, dimensions, materials, and configurations described herein are meant to be exemplary and that the actual parameters, dimensions, materials, and/or configurations will depend upon the specific application or applications for which the teachings of the present invention is/are used.

## Claims

1. A forming ring (100) for packaging material comprising rotary forming members (101) rotatably arranged to define an opening (102) for forming the packaging material in a tube-shaped configuration (200) extending in a longitudinal direction (103), wherein the rotary forming members are arranged in a first plane (104) of the forming ring,
at least one sealing member (105, 106) configured to, in use, seal longitudinal joining surfaces (201, 201') of the tube-shaped configuration, subsequent of forming the packaging material in the tube-shaped configuration in the opening, wherein the at least one sealing member is arranged at an offset distance (107) from the first plane in the longitudinal direction.

2. Forming ring according to claim 1, wherein the at least one sealing member is rotatably arranged to the forming ring, whereby a rotational axis (111, 111') of the at least one sealing member is arranged at the off-set distance from the first plane.

3. Forming ring according to claim 2, wherein the at least one sealing member comprises first (105) and second (106) rotatable members arranged to pinch the packaging material therebetween, in use, for sealing thereof along the longitudinal joining surfaces.

4. Forming ring according to claim 3, wherein the first and second rotatable members are arranged in the longitudinal direction so that the packaging material, in use, is pinched at the off-set distance from the first plane.

5. Forming ring according to any of claims 1-4, wherein respective rotational axes (101') of the rotary forming members are arranged to extend in said plane.

6. Forming ring according to any of claims 1-5, wherein the rotary forming members are arranged to define a periphery (108) of the opening, wherein the at least one sealing member is arranged at the off-set distance so that the forming ring comprises a radial spacing (109) extending in said plane in a radial outward direction (110) from the periphery.

7. Forming ring according to claim 6, wherein the radial spacing has a width in an orthogonal direction (112), being perpendicular to the radial outward direction and to the longitudinal direction, corresponding to a width (113) of the at least one sealing member the orthogonal direction.

8. Forming ring according to any of claims 1-7, comprising a mounting element (114) configured to attach the at least one sealing member at a variable position along the longitudinal direction and/or at a variable position along a direction perpendicular to the longitudinal direction.

9. Forming ring according to claim 3, wherein the first rotatable member comprises a first roller (105) arranged at the forming ring radially outside a periphery (108) of the opening, and wherein the second rotatable member comprises a pressure roller (106) attachable to a filling pipe (202) arranged inside the tube-shaped configuration of packaging material.

10. A method (300) of forming and sealing packaging material with a forming ring (100) having rotary forming members (101) rotatably arranged to define an opening (102), the method comprises
forming (301) the packaging material in a tube-shaped configuration (200) in the opening by conveying the packaging material in a longitudinal direction (103) through the opening, and
sealing (311) longitudinal joining surfaces (201, 201') of the tube-shaped configuration with at least one sealing member (105, 106), subsequent of forming the packaging material in the tube-shaped configuration in the opening.

11. Method according to claim 10, wherein the rotary forming members are arranged in a first plane (104) of the forming ring, and wherein the at least one sealing member is arranged at an off-set distance (107) from the first plane in the longitudinal direction.

12. Method according to claim 10 or 11, comprising
forming (302) a first longitudinal section (204) of the tube-shaped configuration of the packaging material with a defined overlap (L) between the longitudinal joining surfaces,
sealing (303) the first longitudinal section by joining the longitudinal joining surfaces for fixation (304) of the defined overlap,
conveying (305) a second longitudinal section (205) of the tube-shaped configuration through the opening, wherein the second longitudinal section comprises a section (203) of increased thickness in a radial direction (110) of the tube-shaped configuration, whereby the overlap between the longitudinal joining surfaces of the second longitudinal section is temporarily increased (306) from the defined overlap,
conveying (307) the second longitudinal section to the at least one sealing member, whereupon the overlap between the longitudinal joining surfaces at the at least one sealing member is increased (308) to said defined overlap, and
sealing (309) the second section by joining the longitudinal joining surfaces for fixation (310) of the defined overlap.

13. Filling machine comprising a forming ring (100) according to any of claims 1 - 9, and packaging material formed in a tube-shaped configuration (200) in an opening (102) of the forming ring defined by rotary forming members (101) arranged in a first plane (104), the tube-shaped configuration extending in a longitudinal direction (103), wherein at least one sealing member (105, 106) is configured to, in use, seal longitudinal joining surfaces (201, 201') of the tube-shaped configuration, subsequent of forming the packaging material in the tube-shaped configuration in the opening, wherein the at least one sealing member is arranged at an off-set distance (107) from the first plane in the longitudinal direction.
